# EUROPÄISCHE PATENTSCHRIFT

(11) **EP 3 647 593 B1**
(45) Veröffentlichungstag und Bekanntmachung des Hinweises auf die Patenterteilung: **07.04.2021**
(21) Anmeldenummer: 19000489.5
(22) Anmeldetag: 25.10.2019
(51) Int. Cl.: F04B 39/16, F17C 5/06, F17C 13/02

(54) **FEUCHTEMESSVORRICHTUNG FÜR GASE**
DEVICE FOR MEASURING THE HUMIDITY OF GASES
DISPOSITIF DE MESURE DE L'HUMIDITÉ POUR GAZ

(30) Priorität: 02.11.2018 DE 102018008636
(43) Veröffentlichungstag der Anmeldung: 06.05.2020
(73) Patentinhaber: Bauer Kompressoren GmbH, 81477 München (DE)
(72) Erfinder: Kampfl, Robert, 81379 München (DE); Burmeister, Thomas, 80807 München (DE)
(74) Vertreter: Hering, Hartmut

(56) Entgegenhaltungen:
- DE-U1-202009 008 103
- DE-U1-202013 005 806

## Beschreibung

Die Erfindung befasst sich mit einer Feuchtemessvorrichtung für Gase, insbesondere für komprimierte Gase, komprimierte Luft oder dgl., zur Feuchtegehaltserfassung bei Gasversorgungsanlagen. Als Gasversorgungsanlagen kommen insbesondere Gasversorgungsanlagen wie Kompressoranlagen, Speichersysteme oder dgl. in Betracht.

Eine Feuchtemessvorrichtung für Gase der vorstehend genannten Art umfasst einen mit der Gasversorgungsanlage verbundenen Gasentnahmeeingang für das zu messende Gas und einen Taupunktsensor. Bei derartigen üblichen Feuchtemessvorrichtung verstreicht viel Zeit, bis der vorgesehene Taupunktsensor in zuverlässiger Weise den Feuchtegehalt erfasst, da üblicherweise über einen Gasentnahmeeingang auch weitere Sensoranordnungen mit Prüfgas versorgt werden und daher Feuchtigkeit selbst bei abgeschalteter Gasversorgungsanlage in dem Gaskanal vorhanden ist und sich ansammeln kann, welcher mit dem Gasentnahmeeingang für das zu messende Gas verbunden ist. Daher müssen bisher für eine zuverlässige Feuchtegehaltserfassung lange Wartezeiten in Kauf genommen werden.

Die Druckschriften DE 20 2013 005 806 U1 und DE 20 2009 008 103 U1 beziehen sich auf mikroprozessorgesteuerte permanente Druckgas-Filter Überwachung, wobei über ins Leitungssystem eingesetzte Sensoren der Feuchtigkeitsgehalt des Druckgases überwacht wird.

Die Erfindung zielt daher darauf ab, eine Feuchtemessvorrichtung für Gase bereitzustellen, welche eine zeitnahe, zuverlässige und präzise Feuchtegehaltsmessung ermöglicht.

Gemäß der Erfindung wird hierzu eine Feuchtemessvorrichtung für Gase, insbesondere komprimierte Gase, komprimierte Luft oder dgl. zur Feuchtegehaltserfassung bei Gasversorgungsanlagen, vorzugsweise Gasversorgungsanlagen, wie Kompressoranlagen, Speichersysteme oder dgl. mit einem mit der Gasversorgungsanlage verbundenen Gasentnahmeeingang für das zu messende Gas und mit einem Taupunktsensor bereitgestellt, welche sich dadurch auszeichnet, dass vom Gasentnahmeeingang ein nur zur Feuchtemessung dienender, gesonderter Gaskanal abzweigt, der mit einer Messzelle verbunden ist, in welcher der Taupunktsensor angeordnet ist, und die kommunizierend mit einer nachgeschalteten Trocknungszelle in Verbindung steht, in welcher ein Trocknungsmittel vorgesehen ist, die gegenüber der Außenumgebung im wesentlichen hermetisch abgedichtet ist und die ausgangsseitig mit einem zur Außenumgebung führenden Auslasskanal verbunden ist.

Bei der erfindungsgemässen Lösung wird ein nur zur Feuchtemessung dienender Gaskanal vorgesehen, welcher von dem Gasentnahmeeingang abzweigt. Somit erfolgt bei der erfindungsgemäßen Lösung die Feuchtigkeitserfassung unabhängig von evtl. weiteren nachgeschalteten Sensoren für andere evtl. zu erfassende Gasbestandteile.

In einer Messzelle, die mit dem gesonderten Gaskanal kommunizierend in Verbindung steht, ist der Taupunktsensor angeordnet. Um das Messergebnis möglichst unverfälscht von Feuchtigkeit in der Messzelle oder in den mit derselben in Verbindung stehenden Leitungsteilen zu erhalten, steht die Messzelle in kommunizierender Verbindung mit einer nachgeschalteten Trocknungszelle, in welcher ein Trocknungsmittel vorgesehen ist. Hierdurch kann die Messzelle weitgehend im wesentlichen von der Außenumgebung abgedichtet möglichst trocken gehalten werden, so dass mit Hilfe des Taupunktsensors in der Messzelle zeitnah und zuverlässig eine präzise Feuchtegehaltsmessung erfolgen kann. Es braucht daher nicht abgewartet zu werden, bis der Taupunktsensor weitgehend unbeeinflusst vom Feuchtegehalt in der Messzelle zuverlässige Werte liefert, da zeitnah zum Messbeginn die Messzelle weitgehend frei von Feuchtigkeit ist.

Die Trocknungszelle ist gegenüber der Außenumgebung im wesentlichen hermetisch abgedichtet, so dass auch dann, wenn die Feuchtemessvorrichtung nicht aktiv ist, möglichst keine Feuchtigkeit über der Außenumgebung in die Messzelle gelangen kann.

Bevorzugte Weiterbildungen der Erfindung sind in den Ansprüchen 2 bis 12 wiedergegeben.

Insbesondere kann in bevorzugter Weise bei der Abschaltung der Gasversorgung der gesonderten und nur für die Feuchtemessung dienende Gaskanal eingangsseitig vor der Messzelle und/oder nach der Trocknungszelle abgesperrt werden. Zur Absperrung kann beispielsweise ein Ventil oder vorzugsweise ein Rückschlagventil vorgesehen sein. Wenn ein Rückschlagventil vorgesehen ist, so erfolgt das Öffnen und Schließen ohne manuellen Eingriff.

Insbesondere ist zwischen der Messzelle und der Trocknungszelle eine Düse vorgesehen, die vorzugsweise in einer Trennscheibe zwischen der Messzelle und der Trocknungszelle vorgesehen ist. Durch diese Düsenverengung wird erreicht, dass das Trocknungsmittel in der Trocknungszelle zuverlässig ein Trockenhalten der Messzelle sicherstellen kann.

Als besonders zweckmäßig hat sich erwiesen, dass zur hermetischen Abdichtung gegenüber der Außenumgebung ausgangsseitig die Trocknungszelle durch eine kombinierte Metall- und/oder Polymerdichtung angeordnet ist. Ferner können vorhandene Gewindeverbindungen mittels eines Gewindedichtbandes, vorzugsweise eines Teflondichtbandes, abgedichtet sein, um ein Eindringen von Feuchtigkeit durch die Gewindegänge zu vermeiden.

Gemäß einer weiteren bevorzugten Ausführungsform ist im abzweigenden, gesonderten Gaskanal der Messzelle vorgeschaltet eine als Druckminderer dienende Düse vorgesehen. Hierdurch kann der Druck des Prüfgases vorzugsweise auf Atmosphärendruck herabgesenkt werden, bevor es in die Messzelle mit dem dort angeordneten Taupunktsensor strömt. Ferner können Gewindegänge durch Formung gefertigt sein. Hierdurch wird erreicht, dass möglichst wenig Feuchtigkeit auf den Gewindegängen haften kann, da diese glatt mit einer äußerst geringen Oberflächenrauhigkeit ausgebildet werden.

Als Trocknungsmittel kommt insbesondere ein Molekularsieb, Silicagel, aktiviertes Aluminiumoxid oder Aktivkohle in Betracht. Wenn ein Molekularsieb als Trocknungsmittel eingesetzt wird, haben sich Größen von 3Ä, 4Ä oder 10Ǻ als zweckmässig erwiesen.

Gemäß einer bevorzugten Weiterbildung der Erfindung ist die Feuchtemessvorrichtung als ein selbständiges, autarkes, mobiles Gerät ausgebildet.

Alternativ kann die Feuchtemessvorrichtung nach der Erfindung in die Gasversorgungsanlage, vorzugsweise Kompressoranlage integriert sein.

Zusammenfassend ist es bei der erfindungsgemäßen Feuchtemessvorrichtung für Gase insbesondere wesentlich, dass eine nur zur Feuchtemessung dienender Gaskanalabzweigung vom Gasentnahmeeingang vorgesehen ist, um die Feuchtemessung unabhängig von evtl. weiteren vorgesehenen Sensoren für andere Gasbestandteile zu ermöglichen.

In diesem gesonderten, nur zur Feuchtemessung dienenden Kanal ist eine Messzelle angeordnet, in welcher der Taupunktsensor vorgesehen ist. Um die Messzelle mit dem dort vorgesehen Taupunktsensor möglichst frei von Feuchtigkeit zu halten, ist der Messzelle in kommunizierender Verbindung nachgeschaltet eine Trocknungszelle vorgesehen. In dieser Trocknungszelle ist ein Trocknungsmittel vorgesehen, mittels welchem die Messzelle möglichst weitgehend frei von Feuchtigkeit oder in trockenem Zustand gehalten wird.

Um eine möglichst schnelle und unverfälschte Feuchtemessung vorzunehmen, ist die Trocknungszelle gegenüber der Außenumgebung hermetisch abgedichtet.

Mit der erfindungsgemäßen Auslegung der Feuchtemessvorrichtung wird somit auf zuverlässige Weise erreicht, dass in der Messzelle mit Hilfe des Taupunktsensors schnell nach Eintreten des Prüfgases zuverlässige Feuchtegehaltswerte erfasst werden können.

Ohne jeglichen beschränkenden Charakter wird nachstehend unter Bezugnahme auf die einzige Figur der Zeichnung eine bevorzugte Ausführungsform näher erläutert.

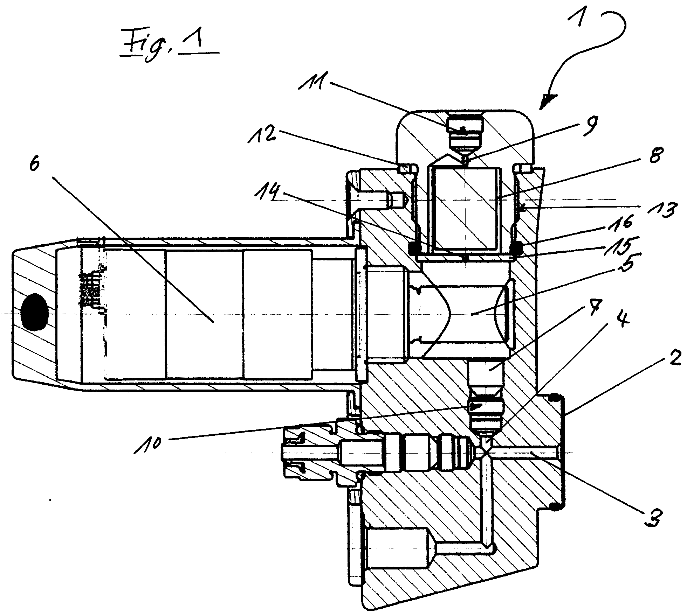

Die einzige Figur 1 der Zeichnung zeigt in einer Schnittanordnung eine Feuchtemessvorrichtung für Gase nach der Erfindung.

In der einzigen Figur der Zeichnung ist die Messvorrichtung für Gase, insbesondere komprimierte Gase insgesamt mit 1 bezeichnet. Der Gasentnahmeeingang ist mit 2 bezeichnet, welcher mit einer nicht näher dargestellten Gasversorgungsanlage verbunden ist. Als Gasversorgungsanlagen kommen insbesondere Druckgasversorgungsanlagen, wie Kompressoranlagen, Speichersysteme oder dgl. in Betracht.

Das von der Gasversorgungsanlage über den Gasentnahmeeingang 2 einströmende Gas tritt über einen Gaseinlasskanal 3 ein. Hiervon zweigt ein gesonderter und nur für die Feuchtemessung dienender Gaskanal 4 ab.

Die dem abzweigenden Gaskanal 4 nachgeschalteten Verbindungskanäle führen zu weiteren nicht näher gezeigten Sensoranordnungen zur evtl. Bestimmung von weiteren Gasbestandteilen.

Der gesonderte, abzweigende Gaskanal 4 steht in kommunizierender Verbindung mit einer Messzelle 5, in der ein Taupunktsensor 6 angeordnet ist. Der Messzelle 5 vorgeschaltet ist im gesonderten Gaskanal 4 eine Düse 7 angeordnet, welche als Druckminderer dient und den Gasdruck auf etwa Atmosphärendruck reduziert. Die Messzelle 5 steht kommunizierend in Verbindung mit der nachgeschalteten Trocknungszelle 8, in welcher ein nicht näher dargestelltes Trocknungsmittel vorgesehen ist. Die Trocknungszelle 8 ist gegenüber der Außenumgebung im wesentlichen hermetisch abgedichtet. Ausgangsseitig geht von der Trocknungszelle 8 ein zur Außenumgebung führender Auslasskanal 9 ab.

Um ein Eindringen von Feuchtigkeit bei Abschaltung der Gasversorgung zu verhindern, ist der gesonderte Gaskanal 4 eingangsseitig vor der Messzelle 5 und/oder nach der Trocknungszelle 8 absperrbar, wozu als Beispiel in der einzigen Figur Rückschlagventile 10, 11 gezeigt sind.

Zur hermetischen Abdichtung gegenüber der Außenumgebung ist ausgangsseitig der Trocknungszelle 8 eine kombinierte Metall- und Polymerdichtung 12 vorgesehen. Vorhandene Gewindeverbindungen, welche schematisch mit 13 angedeutet sind, können mittels eines Gewindedichtbandes zusätzlich abgedichtet werden. Um möglichst glatte Oberflächen der Gewindeverbindungen zu erhalten, können die Gewindegänge vorzugsweise mittels Formung ausgebildet werden.

Zwischen der Messzelle 5 und der Trocknungszelle 8 ist eine Düse 14 vorgesehen, welche beim dargestellten Beispiel in einer Trennscheibe 15 ausgebildet ist, die zwischen der Messzelle 5 und der Trocknungszelle 8 angeordnet ist. Diese Trennscheibe 15 ist mittels einer Elastomerdichtung 16 abgedichtet gehalten.

Obgleich nicht näher dargestellt, kann als Trocknungsmittel ein Molekularsieb, Silicagel, aktives Aluminiumoxid, Aktivkohle oder dgl. eingesetzt werden. Falls ein Molekularsieb eingesetzt wird, so kann dies eine Größe von 3Ǻ, 4Ǻ oder 10Ǻ haben.

Die nach der Erfindung ausgelegte Feuchtemessvorrichtung 1 kann als ein selbständiges, autarker, mobiles Gerät ausgelegt sein, oder sie kann beispielsweise in eine Gasversorgungsanlage, wie eine Kompressoranlage, integriert sein.

Die Erfindung ist natürlich nicht auf die voranstehend beschriebenen Einzelheiten beschränkt, sondern es sind zahlreiche Abänderungen und Modifikationen möglich, die der Fachmann im Bedarfsfall treffen wird, ohne den Erfindungsgedanken zu verlassen. Wesentlich bei der Erfindung ist ein gesonderter und nur zur Feuchtemessung dienender Gaskanal 4, welcher mit einer Messzelle 5 und einer nachgeschalteten Trocknungszelle 8 kommunizierend verbunden ist.

Um ein Eindringen von Feuchtigkeit bei abgeschalteter Gasversorgung weitgehend zu vermeiden, ist in dem Gaskanal 4 der Messzelle 5 vorgeschaltet eine Absperreinrichtung, wie ein Rückschlagventil 10 angeordnet und ggfs. kann nach der Trocknungszelle 8 auch noch eine Absperreinrichtung vorgesehen sein, welche von dem dargestellten Rückschlagventil 11 gebildet werden kann. Somit kann bei abgeschalteter Gasversorgung der gesamte Bereich des gesondert abzweigenden Gaskanals 4 mit der Messzelle 5 oder der Trocknungszelle 8 zuverlässig abgesperrt und soweit wie möglich trocken gehalten werden.

### Bezugszeichenliste

- 1: Feuchtemessvorrichtung
- 2: Gasentnahmeeingang
- 3: Gaseinlasskanal
- 4: gesonderter, abzweigender Gaskanal
- 5: Messzelle
- 6: Taupunktsensor
- 7: Düse, welche als Druckminderer dient
- 8: Trocknungszelle
- 9: Auslasskanal
- 10: Rückschlagventil vor Messzelle 5
- 11: Rückschlagventil nach Trocknungszelle 8
- 12: kombinierte Metall- und Polymerdichtung
- 13: Gewindeverbindungen
- 14: Düse zwischen Messzelle 5 und Trocknungszelle 8
- 15: Trennscheibe
- 16: Elastomerdichtung für Trennscheibe 15

## Patentansprüche

1. Feuchtemessvorrichtung für Gase, insbesondere komprimierte Gase, komprimierte Luft oder dgl. zur Feuchtegehaltserfassung bei Gasversorgungsanlagen, vorzugsweise Druckgasversorgungsanlagen, wie Kompressoranlagen, Speichersysteme oder dgl. mit einem mit der Gasversorgungsanlage verbundenen Gasentnahmeeingang (2) für das zu messende Gas und mit einem Taupunktsensor, **dadurch gekennzeichnet, dass** vom Gasentnahmeeingang (2) ein nur zur Feuchtemessung dienender, gesonderter Gaskanal (4) abzweigt, der mit einer Messzelle (5) verbunden ist, in welcher der Taupunktsensor (6) angeordnet ist und die kommunizierend mit einer nachgeschalteten Trocknungszelle (8) in Verbindung steht, in welcher ein Trocknungsmittel vorgesehen ist, die gegenüber der Außenumgebung im wesentlichen hermetisch abgedichtet ist und die ausgangsseitig mit einem zur Außenumgebung führenden Auslasskanal (9) verbunden ist.

2. Feuchtemessvorrichtung nach Anspruch 1, **dadurch gekennzeichnet, dass** bei Abschaltung der Gasversorgung der gesonderte Gaskanal (4) eingangsseitig vor der Messzelle (5) und/oder nach der Trocknungszelle (8) absperrbar ist.

3. Feuchtemessvorrichtung nach Anspruch 2, **dadurch gekennzeichnet, dass** zur Absperrung jeweils ein Ventil, vorzugsweise ein Rückschlagventil (10, 11), vorgesehen ist.

4. Feuchtemessvorrichtung nach einem der Ansprüche 1 bis 3, **dadurch gekennzeichnet, dass** zwischen der Messzelle (5) und der Trocknungszelle (8) eine Düse (14), vorzugsweise in einer Trennscheibe (15), zwischen der Messzelle (5) und der Trocknungszelle (8), angeordnet ist.

5. Feuchtemessvorrichtung nach einem der Ansprüche 1 bis 4, **dadurch gekennzeichnet, dass** zur hermetischen Abdichtung gegenüber der Außenumgebung vorzugsweise ausgangsseitig der Trocknungszelle (8) eine kombinierte Metall- und Polymerdichtung (12) angeordnet ist.

6. Feuchtemessvorrichtung nach einem der Ansprüche 1 bis 5, **dadurch gekennzeichnet, dass** vorhandene Gewindeverbindungen (13) mittels Gewindedichtband, vorzugsweise einem Teflondichtband, abgedichtet sind.

7. Feuchtemessvorrichtung nach einem der vorangehenden Ansprüche, **dadurch gekennzeichnet, dass** im abzweigenden, gesonderten Gaskanal (4) der Messzelle (5) vorgeschaltet eine als Druckminderer dienende Düse (7) angeordnet ist.

8. Feuchtemessvorrichtung nach einem der Ansprüche 1 bis 7, **dadurch gekennzeichnet, dass** die Gewindegänge durch Formung gefertigt sind.

9. Feuchtemessvorrichtung nach einem der Ansprüche 1 bis 8, **dadurch gekennzeichnet, dass** als Trocknungsmittel ein Molekularsieb, Silicagel, aktiviertes Aluminiumoxid oder Aktivkohle eingesetzt wird.

10. Feuchtemessvorrichtung nach Anspruch 9, **dadurch gekennzeichnet, dass** das Molekularsieb eine Größe von 3Ǻ, 4Ǻ oder 10Ǻ hat.

11. Feuchtemessvorrichtung nach einem der Ansprüche 1 bis 10, **dadurch gekennzeichnet, dass** die Feuchtemessvorrichtung (1) als ein selbständiges, autarkes, mobiles Gerät ausgebildet ist.

12. Feuchtemessvorrichtung nach einem der Ansprüche 1 bis 10, **dadurch gekennzeichnet, dass** die Feuchtemessvorrichtung (1) in die Gasversorgungsanlage, vorzugsweise die Kompressoranlage, integriert ist.

## Claims

1. A moisture-measuring device for gases, in particular compressed gases, compressed air or the like, for detecting moisture content in gas-supply systems, preferably pressurised gas-supply systems, such as compressor stations, storage systems or the like, with a gas-sampling input (2) for the gas to be measured and connected to the gas-supply system, and with a dew point sensor, **characterised in that** a separate gas channel (4), serving only for moisture measurement, branches off from the gas-sampling input (2), which channel is connected to a measuring cell (5) in which the dew point sensor (6) is arranged and which is in communicative connection to a downstream drying cell (8) in which a drying agent is provided, which agent is substantially hermetically sealed against the outside environment and which is connected to an outlet channel (9) leading to the outside environment.

2. The moisture-measuring device according to claim 1, **characterised in that**, when the gas supply is switched off, the separate gas channel (4) can be shut off on the input side upstream of the measuring cell (5) and/or downstream of the drying cell (8).

3. The moisture-measuring device according to claim 2, **characterised in that** a valve, preferably a check valve (10, 11), is provided for shutting off.

4. The moisture-measuring device according to one of claims 1 to 3, **characterised in that** a nozzle (14) is arranged between the measuring cell (5) and the drying cell (8), preferably in a separating disc (15) between the measuring cell (5) and the drying cell (8).

5. The moisture-measuring device according to one of claims 1 to 4, **characterised in that** a combined metal and polymer seal (12) is arranged preferably on an output side of the drying cell (8) for hermetic sealing against the outside environment.

6. The moisture-measuring device according to one of claims 1 to 5, **characterised in that** those threaded connections (13) present are sealed by way of thread-sealing tape, preferably a Teflon sealing tape.

7. The moisture-measuring device according to one of the preceding claims, **characterised in that** a nozzle (7) serving as a pressure reducer is arranged upstream of the measuring cell (5) in the branching-off, separate gas channel (4).

8. The moisture-measuring device according to one of claims 1 to 7, **characterised in that** the threads are made by shaping.

9. The moisture-measuring device according to one of claims 1 to 8, **characterised in that** a molecular sieve, silica gel, activated aluminium oxide or activated carbon is used as drying agent.

10. The moisture-measuring device according to claim 9, **characterised in that** the molecular sieve has a size of 3Å, 4Å or 10Å.

11. The moisture-measuring device according to one of claims 1 to 10, **characterised in that** the moisture-measuring device (1) is designed as an independent, self-sufficient, mobile device.

12. The moisture-measuring device according to one of claims 1 to 10, **characterised in that** the moisture-measuring device (1) is integrated in the gas-supply system, preferably the compressor station.

## Revendications

1. Dispositif de mesure d'humidité pour des gaz, notamment des gaz comprimés, de l'air comprimé ou similaire pour la détection de la teneur en humidité dans des installations de distribution de gaz, de préférence des installations de distribution de gaz comprimés, telles que des installations de compression de gaz, des systèmes de stockage de gaz ou similaires, avec une entrée de prise de gaz (2) reliée à l'installation de distribution de gaz pour le gaz à mesurer et avec un détecteur du point de rosée, **caractérisé en ce qu'**une conduite de gaz séparée (4) servant uniquement à la mesure d'humidité est dérivée de l'entrée de prise de gaz (2), conduite de gaz séparée qui est reliée à un cellule de mesure (5) dans lequel est disposé le détecteur du point de rosée (6) et qui communique avec une cellule de séchage (8) montée en aval, dans laquelle est prévu un agent de séchage, la cellule de séchage (8) étant fermée sensiblement hermétiquement par rapport à l'environnement extérieur et reliée côté sortie à un canal de sortie (9) conduisant vers l'environnement extérieur.

2. Dispositif de mesure d'humidité suivant la revendication 1, **caractérisé en ce qu'**en cas d'arrêt de l'approvisionnement en gaz, la conduite de gaz séparée (4) peut être obturé côté entrée en amont du cellule de mesure (5) et/ou en aval de la cellule de séchage (8).

3. Dispositif de mesure d'humidité suivant la revendication 2, **caractérisé en ce qu'**un clapet, de préférence un clapet anti-retour (10, 11) est respectivement prévu pour l'obturation.

4. Dispositif de mesure d'humidité suivant une des revendications 1 à 3, **caractérisé en ce qu'**une buse (14) est disposée de préférence dans une plaque de séparation (15) entre le cellule de mesure (5) et la cellule de séchage (8).

5. Dispositif de mesure d'humidité suivant une des revendications 1 à 4, **caractérisé en ce qu'**une garniture de métal et polymère combinés (12) est disposée pour l'étanchéité hermétique par rapport à l'environnement extérieur, de préférence côté sortie de la cellule de séchage (8).

6. Dispositif de mesure d'humidité suivant une des revendications 1 à 5, **caractérisé en ce que** des raccords filetés existants (13) sont étanchéifiés au moyen d'un ruban d'étanchéité de filets, de préférence au moyen d'un ruban d'étanchéité en téflon.

7. Dispositif de mesure d'humidité suivant une des revendications, **caractérisé en ce qu'**une buse (7) servant de réducteur de pression est disposée dans la conduite de gaz séparée dérivé (4) monté en amont de la cellule de mesure (5).

8. Dispositif de mesure d'humidité suivant une des revendications 1 à 7, **caractérisé en ce que** les filets sont fabriqués par moulage.

9. Dispositif de mesure d'humidité suivant une des revendications 1 à 8, **caractérisé en ce qu'**un tamis moléculaire, du gel de silice, un oxyde d'aluminium activé ou du charbon actif est utilisé comme agent de séchage.

10. Dispositif de mesure d'humidité suivant la revendication 9, **caractérisé en ce que** le tamis moléculaire présente une taille de 3Å, 4Å ou 10Å.

11. Dispositif de mesure d'humidité suivant une des revendications 1 à 10, **caractérisé en ce que** le dispositif de mesure d'humidité (1) est conçu comme un appareil mobile autonome indépendant.

12. Dispositif de mesure d'humidité suivant une des revendications 1 à 10, **caractérisé en ce que** le dispositif de mesure d'humidité (1) est intégré dans l'installation d'approvisionnement en gaz, de préférence dans une installation de compression de gaz.
